# EUROPEAN PATENT APPLICATION

(11) **EP 2 919 095 A1**
(43) Date of publication of application: **16.09.2015**
(21) Application number: 15152630.8
(22) Date of filing: 27.01.2015
(51) Int. Cl.: G06F 3/01

(54) **Automatic door control device and automatic door control method**

(30) Priority: 13.03.2014 JP 2014050136
(71) Applicant: OMRON CORPORATION, Kyoto-shi, Kyoto 600-8530 (JP)
(72) Inventor: Sakai, Shun, Kyoto-shi, Kyoto 600-8530 (JP); Ohta, Takashi, Kyoto-shi, Kyoto 600-8530 (JP); Takayama, Takahiro, Kyoto-shi, Kyoto 600-8530 (JP)
(74) Representative: Kilian Kilian & Partner

(57) **Abstract**

An automatic door control device (100) that transmits a door opening and closing command to a driving device of an automatic door, comprises a person detector (102) that detects a person approaching the door; a movement detector (104) that detects a movement of a face or a line of sight of the detected person; and a door controller (105) that determines whether or not to open the door based on the detected movement and transmits a corresponding command to the driving device.

## Description

### BACKGROUND OF THE INVENTION

### Field of the Invention

The present invention relates to a control device that controls opening and closing of an automatic door.

### Description of the Related Art

Most automatic doors used nowadays detect a person approaching the door with the aid of a sensor and generate a signal for driving the door to thereby control opening and closing of the door.

When a sensor detects a person who passes through a door, false detection can cause a problem. For example, a configuration of detecting the presence of a person in front of a door using an infrared sensor is widely known. In such a configuration, a person who just crosses in front of a door may be mistaken for a person who passes through the door and the automatic door may be open.

An automatic door device disclosed in Japanese Patent Application Publication No. H7-197740, which is an example of an invention for solving this problem, transmits a door opening signal to a driving device upon detecting a person standing in front of a door.

Moreover, a control device disclosed in Japanese Patent Application Publication No. 2007-285006 images a person who approaches an automatic door from the front and performs door opening control when the person approaches up to a predetermined distance.

### SUMMARY OF THE INVENTION

In the invention disclosed in Japanese Patent Application Publication No. H7-197740, since the door is open when a person standing in front of the door is detected, it is possible to identify a person who intends to pass through the door.

However, in this invention, since the door is not open unless a person stands for a predetermined period, the person who is about to pass through the door needs to stop first. That is, since a time lag occurs until the door is open, the convenience deteriorates. Moreover, even if a person does not intend to pass through a door, when the person stands in front of the door, the door is open.

In contrast, in the invention disclosed in Japanese Patent Application Publication No. 2007-285006, a person coming toward an automatic door is imaged over the door to estimate the distance to the person, and it is determined whether the person intends to pass through the door.

However, in this invention, the face is detected from an image acquired by a camera and the door is open when the face has a predetermined size or larger. Thus, the camera needs to be placed over the door and in the moving direction of a person. Thus, there is a limitation in installation conditions of devices.

The present invention has been made in view of the foregoing and an object thereof is to provide a technique of identifying a person who intends to pass through a door accurately.

In order to solve the problem, an automatic door control device according to the present invention employs a configuration in which it is determined whether or not to open a door based on a movement of the face or the line of sight of a user.

Specifically, an automatic door control device according to the present invention is automatic door control device that transmits a door opening and closing command to a driving device of an automatic door, including: a person detector that detects a person approaching the door; a movement detector that detects a movement of a face or a line of sight of the detected person; and a door controller that determines whether or not to open the door based on the detected movement and transmits a corresponding command to the driving device.

The automatic door control device according to the present invention detects a person in the vicinity of the door, detects the movement of the face or the line of sight of the person, and performs door opening control based on the detected movement. The movement of a detection target may be optional as long as the movement is based on the movement of the face or the line of sight. For example, the movement may be a change in the direction of the line of sight or the face, a change in the position of the staring point, a moving direction, a moving speed, the time required for the movement, a stay period, and a combination thereof.

According to such a configuration, when an operation from which the intention of a person who is about to pass through an automatic door can be estimated is detected, since the door is open typically only when the person intentionally moves the face or the line of sight, it is possible to prevent the door from being open erroneously due to misdetection of a person who does not intend to pass through the door.

The door controller may transmit a door opening command to the driving device when the face or the line of sight of the detected person faces a predetermined direction and the direction does not change for a predetermined period.

It is preferable that an operation that a person who passes through the automatic door performs can be clearly distinguished from an operation that a person who does not passes through the automatic door performs. For example, when a person stands in a state where the detected face or line of sight faces a specific direction, it can be estimated that the person intends to pass through the door.

The movement detector may detect a change in a direction that the face and the line of sight of the detected person faces, and the door controller may transmit a door opening command to the driving device when the detected change in the direction is identical to a predetermined pattern. The predetermined pattern may be a pattern indicating that a person stares at all of a plurality of predetermined regions within a predetermined period.

In this manner, the intention to pass through the door may be estimated based on a change in the direction in which the face or the line of sight faces. According to such a configuration, since the door is open only when the user moves the face or the line of sight so as to be identical to a predetermined pattern, it is possible to further decrease misdetection.

The present invention can be specified as an automatic door control device that includes at least a portion of the above constituent components. Moreover, the present invention can be specified as a method of controlling the automatic door control device, a program for operating the automatic door control device, and a recording medium having the program recorded thereon. The processes and constituent components can be freely combined with each other unless technical contradiction occurs.

According to the present invention, it is possible to provide an automatic door control device capable of identifying a person who intends to pass through an automatic door accurately.

### BRIEF DESCRIPTION OF THE DRAWINGS

FIG. 1 is a diagram illustrating a configuration an automatic door control system according to a first embodiment.
FIG. 2 is a diagram for describing a positional relation between an automatic door and a user.
FIG. 3 is a diagram for describing a region perceived by a user.
FIGS. 4A to 4C are examples of a door opening pattern table.
FIG. 5 is a process flowchart of an automatic door control device according to the first embodiment.
FIG. 6 is a diagram for describing a region perceived by a user according to a second embodiment.

### DESCRIPTION OF THE EMBODIMENTS

### (First Embodiment)

### <System Configuration>

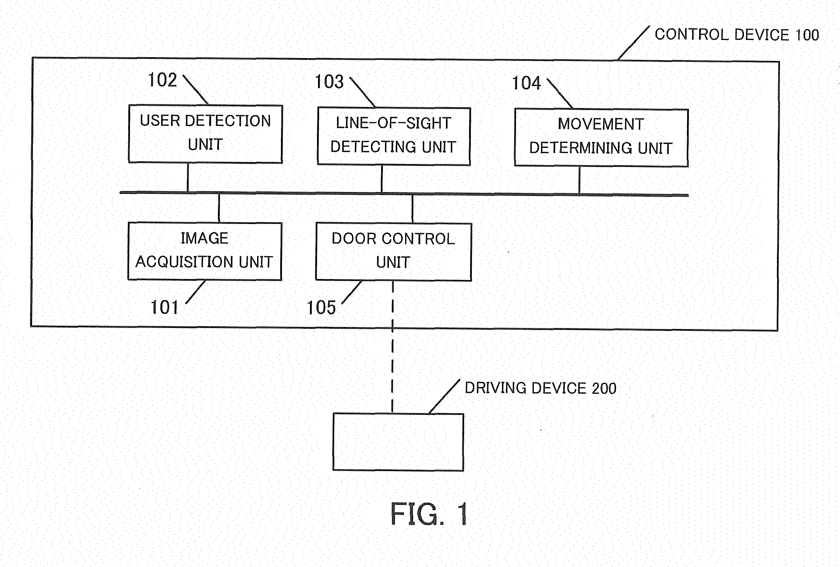

An overview of an automatic door control system according to a first embodiment will be described with reference to FIG. 1 which is a system configuration diagram. The automatic door control system according to the first embodiment is a system that includes a control device 100 and a driving device 200.

The control device 100 is a device for controlling opening and closing of an automatic door and is a device that recognizes the presence of a user who is about to pass through the automatic door, generates a door opening command (opening command) and a door closing command (closing command), and transmits the commands to the driving device 200.

The driving device 200 is a driving unit that includes a motor for opening and closing the automatic door and a unit that opens and closes the door based on a command transmitted from the control device 100. Specifically, the driving device 200 drives an internal motor in an opening direction when an opening command is received and drives the motor in a closing direction. Rotation of the motor is transmitted to a driving mechanism (not illustrated) such as a reduction gear, a pulley, a belt, or a chain, and the door is open. A linear motor or the like may be used for opening and closing of the door.

First, the configuration of the control device 100 will be described. The control device 100 includes an image acquisition unit 101, a user detection unit 102, a line-of-sight detecting unit 103, a movement determining unit 104, a door control unit 105.

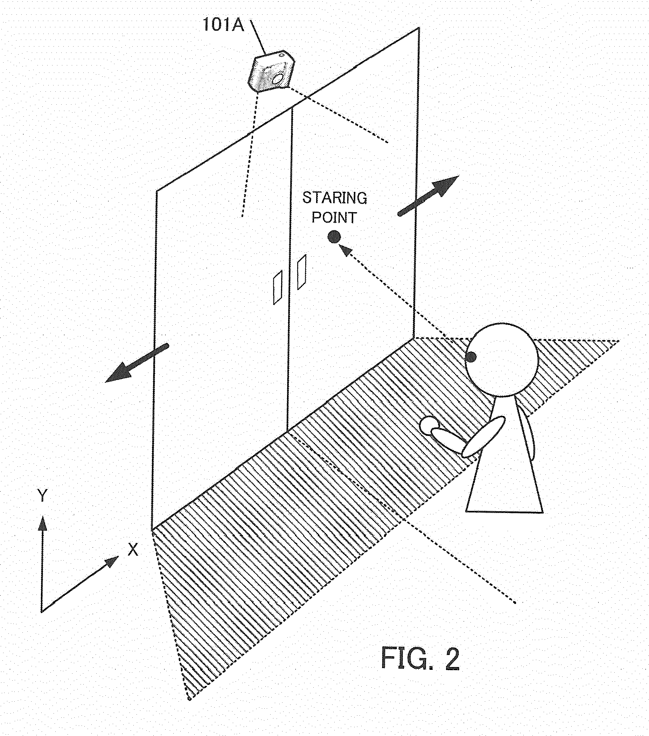

The image acquisition unit 101 is a unit that acquires an image. In the present embodiment, as illustrated in FIG. 2, a person in front of a door is imaged using a camera 101A attached to an upper part of the door. The camera 101A may be a camera that acquires RGB images and may be a camera that acquires grayscale images or infrared images.

The user detection unit 102 is a unit that acquires a positional relation between the user and the door based on the image acquired by the image acquisition unit 101. When the camera 101A is attached to a position where the camera 101A overlooks the user as in FIG. 2, the distance between the user and the door and the direction of the user from the center of the door can be acquired based on the position of a person in the image.

The control device according to the present embodiment determines whether or not to start a door opening process based on the positional relation acquired in this manner. For example, the process can be started when the user is present in a region hatched in FIG. 2.

In the present embodiment, although the distance between the user and the door is acquired using one image acquired by the image acquisition unit 101, other means may be used as long as it is possible to detect the user approaching the door. For example, the distance may be estimated using a plurality of images obtained by imaging the user a plurality of numbers of times, and a sensor such as an ultrasonic sensor that acquires the distance between the user and the door may be provided. Moreover, a user who enters a predetermined range of regions may be detected by means of a mat switch or the like. Moreover, when a person is detected from an image, the detection object to be identified may not necessarily be a human, and it is sufficient that an object approaching the door can be detected.

The line-of-sight detecting unit 103 is a unit that detects the direction of the line of sight of the user based on the image acquired by the image acquisition unit 101 and specifies a place that the user stares at. The direction of the line of sight can be acquired by detecting a face region from the acquired image, detecting the eye region included in the face region, and detecting a corneal reflex and the pupil position included in the eye region, for example. Moreover, it is possible to specify a point (hereinafter a staring point) at which the user stares at based on the acquired line-of-sight direction and the positional relation between the user and the door. Since the technique of recognizing the line-of-sight direction and the staring point is well known, detailed description thereof will not be provided.

The staring point is expressed using a coordinate system (hereinafter d door coordinate system) about the door. In the present embodiment, a point that the user stares at in the door coordinate system expressed by X and Y axes as in FIG. 2 is specified (the Z-axis is fixed to the position of the door).

The movement determining unit 104 is a unit that follows the position of the acquired staring point and determines whether the movement of the staring point is identical to a predetermined pattern (hereinafter a door opening pattern). In the first embodiment, the movement determining unit 104 stores a door opening pattern "The staring point stays in a predetermined region for a predetermined period" and determines that the door is to be open when the movement of the acquired staring point is identical to the pattern.

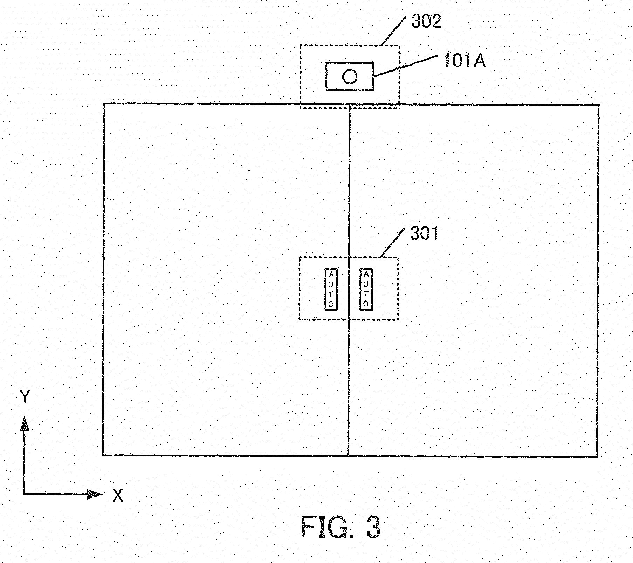

FIG. 3 is a front view of an automatic door. The movement determining unit 104 stores a door opening pattern "A user stares at the inner side of a region 301 for one second or longer" and compares the movement of the staring point with the door opening pattern, for example.

The door control unit 105 is a unit that transmits a signal for opening the door to the driving device 200 based on the result of determination obtained by the movement determining unit 104. The signal for opening the door may be an electrical signal and may be a wirelessly modulated signal, a pulse-modulated infrared signal, and the like.

The control device 100 is a computer that includes a processor, a main memory, and an auxiliary memory, and the respective units are realized when a program stored in the auxiliary memory is loaded on the main memory and executed by the processor (the processor, the main memory, and the auxiliary memory are not illustrated).

### <Door Opening Method>

Next, a method of determining whether or not to open the door based on the movement of the line of sight of the user will be described in detail.

First, a process performed by the line-of-sight detecting unit 103 will be described.

The line-of-sight detecting unit 103 acquires a camera image periodically via the image acquisition unit 101, detects the line-of-sight direction of the user, and acquires the coordinate of the staring point in the door coordinate system. The coordinate of the staring point can be calculated based on the acquired line-of-sight direction and the positional relation between the user and the door. The coordinate of the staring point is transmitted to the movement determining unit 104 periodically (for example, 30 times every second).

Upon acquiring the coordinate of the staring point from the line-of-sight detecting unit 103, the movement determining unit 104 adds the coordinate to time-series data which represents the movement of the staring point. The time-series data is constructed by a queue, and data of which the acquisition date is older than a predetermined date among the items of data (coordinates of the staring point) included in the queue is removed in chronological order of the date of acquisition.

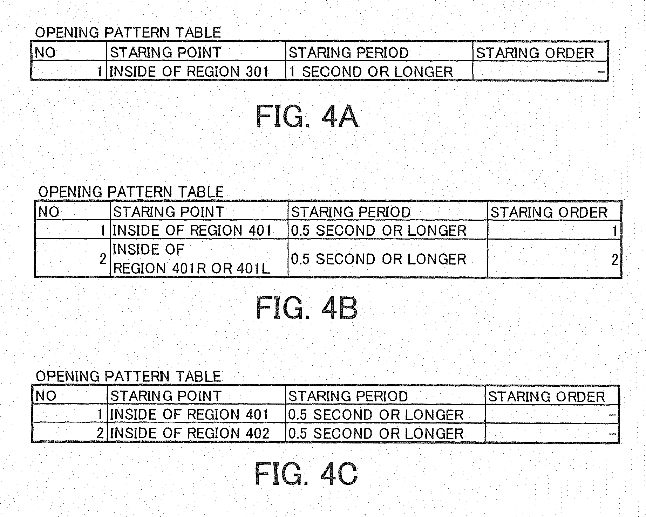

Moreover, the door opening pattern is stored in the movement determining unit 104. FIGS. 4A to 4C are examples of a table (door opening pattern table) in which the door opening pattern is recorded. The movement determining unit 104 compares a change in the coordinate of the staring point recorded in the time-series data with the door opening pattern and determines whether the change is identical to the door opening pattern.

As illustrated in FIGS. 4A to 4C, the door opening pattern is made up of at least one condition, and each condition is made up of three elements of the location of the staring point, a staring period, and a staring order. Each condition is determined to be satisfied when all of these elements are satisfied. Moreover, it is determined that the change is identical to the door opening pattern when all conditions are satisfied.

The door opening pattern corresponding to the first embodiment is as illustrated in FIG. 4A. That is, in this example, it is determined that the change is identical to the door opening pattern when the user stares at the vicinity of an automatic door sign (the inside of the region 301) for one second or longer and the door is open.

In the examples of FIGS. 4A to 4C, although the staring region is described as words in order to simplify the description, the actual region is represented by a coordinate value or the like in the door coordinate system.

An action registered as the door opening pattern may preferably be an action that only persons who pass through a door perform intentionally. For example, the door may be open when a person stares at the camera 101A attached to the upper part of the door. In this case, a door opening pattern "A person stares at the inside of the region 302 for one second or longer" may be registered in the opening pattern table. Moreover, the location that the user stares at may be an optional location such as a camera, a region on the door, or a region near the door. Moreover, the staring period is preferably approximately 0.5 second to one second and may be shorter or longer than this period.

### <Process Flowchart>

Next, a flowchart of a process for realizing the functions described above will be described.

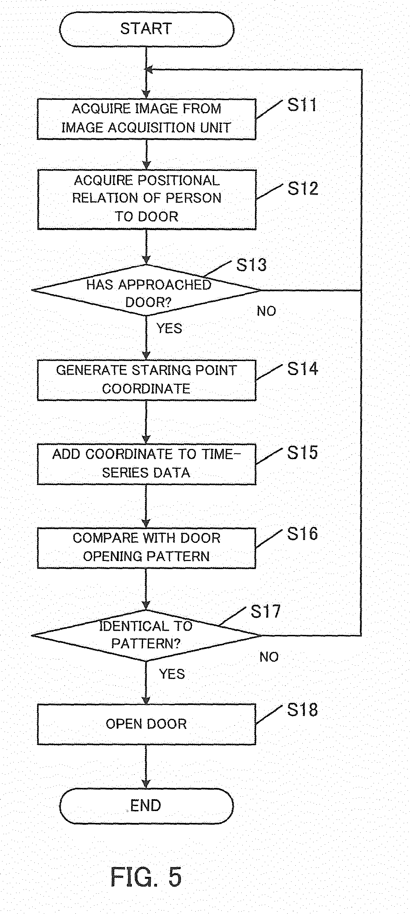

FIG. 5 is a flowchart of the process of the control device 100 according to the present embodiment. The process starts when the control device 100 is powered on and is executed repeatedly every predetermined period.

First, in step S11, the image acquisition unit 101 acquires a camera image. In this step, an RGB color image of a bird-eye view of the front surface of the door is acquired using the camera 101A provided in the upper part of the front surface of the automatic door.

Subsequently, in step S12, the user detection unit 102 acquires a positional relation between the user and the door using the camera image acquired in step S11. Moreover, it is determined whether the user is sufficiently close to the door (step S13), and the process proceeds to step S14 when it is determined that the user is sufficiently close to the door. When the user is not sufficiently close to the door, or when the user is not present, the process returns to step S11 because it is not necessary to open the door.

Subsequently, in step S14, the line-of-sight detecting unit 103 detects the line-of-sight direction of the user, generates the coordinate of the staring point, and transmits the staring point coordinate to the movement determining unit 104.

Subsequently, in step S15, the movement determining unit 104 adds the acquired staring point coordinate to time-series data which represents the movement of the staring point. As described above, the time-series data is constructed by a queue, and when new data is added, the time-series data is sequentially removed in chronological order of the date of acquisition.

In step S16, the movement determining unit 104 compares the stored time-series data with the stored door opening pattern and determines whether the time-series data is identical to the door opening pattern (step S17). When the time-series data is identical to the door opening pattern, the door control unit 105 transmits a door opening signal to the door control unit 105 and the process proceeds to step S18. When the time-series data is not identical to the door opening pattern, the process returns to step S11.

In step S18, the door control unit 105 transmits a door opening signal to the driving device 200. As a result, the automatic door is open.

As described above, the automatic door control system according to the first embodiment determines whether or not to open the automatic door based on the movement of the line of sight of the user. When it is determined whether or not to open the door based on the line-of-sight direction only as in the conventional technique, there is a possibility that a wrong person is recognized as a person who passes through the door. However, since the control device according to the present embodiment compares the movement of the line of sight with a pattern, the door is not open unless a person intentionally moves the line of sight. That is, it is possible to prevent the door from being open erroneously resulting from misdetection.

### (Second Embodiment)

In the first embodiment, door opening control is performed when the staring point stays in a predetermined region for a predetermined period or longer. In contrast, in the second embodiment, the door is open when a change in the position of the staring point is identical to a predetermined pattern. The automatic door control system according to the second embodiment has the same configuration as that of the first embodiment except for the following.

The control device 100 according to the second embodiment performs the same process as that illustrated in FIG. 5, but the door opening pattern is different.

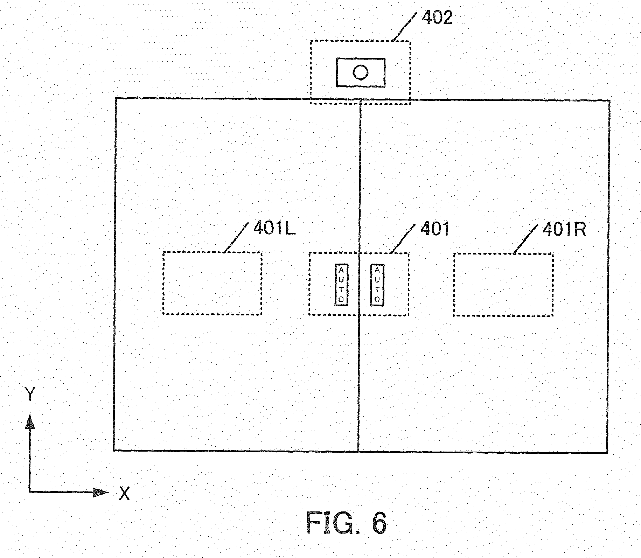

FIG. 6 is a diagram for describing a region that the user stares at in the second embodiment. In the second embodiment, a plurality of regions is set in the door coordinate system, and a door opening pattern "A user perceives a plurality of regions sequentially within a predetermined period" is set.

For example, in the example of FIG. 6, a door opening pattern "A user stares at a region 401 and then stares at a region 401R (or 401L)" is stored in the movement determining unit 104, and it is determined in step S15 whether a change in the acquired staring point coordinate is identical to the door opening pattern. An opening pattern table corresponding to this door opening pattern is the same as that illustrated in FIG. 4B.

The "staring order" is the order in which a user stares at regions. That is, in this example, it is determined that the change is identical to the door opening pattern when the user stares the region 401 and the region 401R (or 401L) sequentially each for 0.5 second or longer.

As described above, according to the second embodiment, since door opening control is not performed unless the user stares at a plurality of regions sequentially, it is possible to further decrease the occurrence rate of misdetection.

In the second embodiment, although a door opening pattern "A user stares at a plurality of regions sequentially" is described, if the order in which the regions are perceived is not determined, the order may not be taken into consideration. For example, in the example of FIG. 6, a door opening pattern "A user stares at both regions 401 and 402" may be used. In this case, the opening pattern table is the same as that illustrated in FIG. 4C.

### (Modification)

The respective embodiments are examples used for describing the present invention, and the embodiments can be appropriately changed or combined without departing from the spirit of the present invention.

Other means than those described in the embodiments may be added to the control device 100. For example, a face authentication unit may be added, the user authentication may be performed based on the acquired image, and the process subsequent to step S14 may be performed only when the authentication was successful.

Moreover, in the embodiments described above, although the staring point coordinate has been acquired by acquiring the line-of-sight direction, the staring point coordinate may not necessarily be acquired by detecting the line of sight. For example, the direction of the face of a user may be estimated from the acquired image, and the process may be performed assuming that the staring point is present in that direction. By doing so, the amount of processing performed by the control device 100 can be reduced.

Moreover, comparison with the door opening pattern may not necessarily be performed based on the position of the staring point. For example, the line-of-sight direction or the facial direction itself may be used. Moreover, the amount of change in the line-of-sight direction or the facial direction, a change rate, the time required for the change, and the like may be used. Moreover, a facial movement other than the examples mentioned above may be added to the door opening pattern. For example, a blink detector may be added and an element "presence of blink" may be added to the door opening pattern.

Moreover, in the embodiments described above, although a method of determining door opening conditions has been described, the door may be closed using the same method. In this case, a door closing pattern different from the door opening pattern may be stored and door opening and closing conditions may be determined, respectively. For example, the door may be open when a user moves the line of sight in a door opening direction and the door may be closed when a user moves the line of sight in a door closing direction.

Moreover, when the line-of-sight detecting unit 103 estimates the staring point coordinate, information on the eye height of the user is required. The height may be a fixed value, and when it is possible to estimate the height of the user based on an image, the eye height may be calculated from the estimated height.

When a fixed value is used as the eye height of the user, the acquired staring point coordinate may be different from the actual coordinate. Due to this, the movement determining unit 104 may correct the difference when the coordinate is compared with the door opening pattern.

### LIST OF REFERENCE NUMERALS

- 100:: Control device
- 101:: Image acquisition unit
- 102:: User detection unit
- 103:: Line-of-sight detecting unit
- 104:: Movement determining unit
- 105:: Door control unit
- 200:: Driving device

## Claims

1. An automatic door control device that transmits a door opening and closing command to a driving device of an automatic door, comprising:
a person detector that detects a person approaching the door;
a movement detector that detects a movement of a face or a line of sight of the detected person; and
a door controller that determines whether or not to open the door based on the detected movement and transmits a corresponding command to the driving device.

2. The automatic door control device according to claim 1, wherein
the door controller transmits a door opening command to the driving device when the face or the line of sight of the detected person faces a predetermined direction and the direction does not change for a predetermined period.

3. The automatic door control device according to claim 1, wherein
the movement detector detects a change in a direction that the face and the line of sight of the detected person faces, and
the door controller transmits a door opening command to the driving device when the detected change in the direction is identical to a predetermined pattern.

4. The automatic door control device according to claim 3, wherein
the predetermined pattern is a pattern indicating that a person stares at all of a plurality of predetermined regions within a predetermined period.

5. An automatic door control method performed by an automatic door control device that transmits a door opening and closing command to a driving device of an automatic door, the method comprising the steps of:
detecting a person approaching the door;
detecting a movement of a face or a line of sight of the detected person; and
determining whether or not to open the door based on the detected movement and transmitting a corresponding command to the driving device.

6. A non-transitory computer readable storing medium recording a computer program for causing a computer to perform the respective steps of the automatic door control method according to claim 5.
